# FASCICULE DE BREVET EUROPEEN

(11) **EP 2 501 960 B1**
(45) Date de publication et mention de la délivrance du brevet: **18.04.2018**
(21) Numéro de dépôt: 10801591.8
(22) Date de dépôt: 15.11.2010
(51) Int. Cl.: F16H 48/22

(54) **DIFFÉRENTIEL À GLISSEMENT LIMITÉ AVEC DISPOSITIF DE POUSSÉE DYNAMIQUE**
SPERRDIFFERENZIAL MIT DYNAMISCHER SCHUBVORRICHTUNG
LIMITED SLIP DIFFERENTIAL HAVING A DYNAMIC THRUST DEVICE

(30) Priorité: 16.11.2009 FR 0905497
(43) Date de publication de la demande: 26.09.2012
(73) Titulaire: Crasset, Dominique, 45260 La Cour Marigny (FR)
(72) Inventeur: Crasset, Dominique, 45260 La Cour Marigny (FR)
(74) Mandataire: Debay, Yves
(86) Numéro de dépôt international: PCT/FR2010/000763
(87) Numéro de publication internationale: WO 2011/058250

(56) Documents cités:
- EP-A1- 0 441 331
- FR-A1- 2 547 883
- US-A- 3 742 784
- US-A- 4 249 429
- US-A- 5 059 160
- US-A- 5 102 378
- US-A1- 2004 198 546
- US-B1- 6 261 202

## Description

La présente invention se rapporte au domaine des différentiels autobloquants ou à glissement limité permettant un fonctionnement en cas de perte d'adhérence d'un des axes de sortie, et plus particulièrement au domaine des différentiels à glissement limité intégrant un dispositif de poussée dynamique.

Les différentiels sont des systèmes mécaniques comportant un organe d'entrée et au moins deux organes de sortie qui ont pour fonction d'assurer une distribution de vitesse de rotation par répartition de l'effort cinématique et des vitesses de rotation, de façon adaptée, immédiate et automatique, aux besoins d'un ensemble mécanique. Un des exemples les plus courants d'utilisation se trouve dans le cadre des véhicules automobiles où le différentiel permet aux roues motrices de tourner à des vitesses différentes lors du passage d'une courbe. Les roues qui se trouvent situées à l'extérieur du virage sont amenées à tourner plus vite que celles qui sont situées à l'intérieur du virage. Cette différence de rotation entre les deux organes de sortie ou entre au moins un organe de sortie avec l'organe d'entrée est appelée vitesse différentielle, puisque les vitesses de rotation des différents organes du différentiel sont différentes.

Toutefois, une des principales faiblesses des différentiels est la perte de l'énergie motrice provenant de l'entrée lorsqu'une des roues montée sur une sortie perd son adhérence. Cette faiblesse a pu être compensée par le développement de différentiels autobloquants ou à glissement limité, arrangés pour permettre la détection d'une différence de couple entre les deux axes de sortie et restreindre l'action du différentiel dans les cas d'adhérence insuffisante sur un de ces deux axes de sortie.

Un exemple de différentiel à glissement limité est enseigné dans la publication de la demande FR 2638500. Dans ce type de différentiel, la diminution d'un couple de rotation d'un organe de sortie par rapport à l'organe de sortie homologue ou par rapport au couple de la couronne d'entrée du différentiel entraîne une solidarisation progressive par l'intermédiaire d'un embrayage, des axes de sorties avec la couronne d'entrée du différentiel.

Toutefois, un tel dispositif s'il permet de s'affranchir de la principale faiblesse connue des différentiels met à jour un nouveau problème. En effet, le différentiel est un système mécanique faisant intervenir des frottements et comporte de ce fait des pertes d'énergie. Dans le cadre d'un différentiel automobile fonctionnant dans le passage d'une courbe, la roue motrice située à l'extérieur tournant plus vite subit une perte d'énergie plus importante, du fait des frottements internes aux différentiels. Cette perte d'énergie se traduit alors par une perte de couple moteur transmis à l'axe de rotation qui porte cette roue en sortie de différentiel, du fait notamment d'une vitesse de rotation axiale imposée par la résistance du sol sur la roue, et mène alors à une perte de couple moteur sur la roue extérieure. De plus, cette diminution d'un couple de sortie du différentiel est reconnue par le mécanisme de glissement limité qui réagit en solidarisant les axes de sortie déclenchant un phénomène dit de sous virage en altérant la trajectoire en courbe. Il devient alors évident que l'utilisation d'un tel différentiel à glissement limité peut être amené à imposer au conducteur la trajectoire de son véhicule en entraînant des écarts de direction lors de passages de courbe, ce qui peut s'avérer particulièrement dangereux pour lui et son environnement.

Un autre exemple de différentiel est enseigné dans la publication de la demande US 2004/0198546 A1. Dans ce document, le dispositif différentiel décrit permet d'obtenir sous l'action d'une charge différent mouvement différentiel. En effet, en fonction de la charge appliquée, le différentiel va limiter le mouvement à laide de bague de pression qui se déplace librement dans le sens de l'essieu mais qui sont incapables de rotation. Dans ce type de différentiel on retrouve les contraintes similaires à celles évoqué précédemment.

La présente invention a pour objet de palier un ou plusieurs inconvénients de l'art antérieur et notamment de proposer un nouveau différentiel qui permette de s'affranchir au moins partiellement du problème de la maîtrise d'un véhicule dans le passage d'une trajectoire courbe.

Cet objectif est atteint grâce à un différentiel à glissement limité d'une part comportant un organe d'entrée et deux organes de sortie et d'autre part intégrant dans un boîtier au moins un satellite et au moins un planétaire arrangés pour permettre une solidarisation totale ou partielle en rotation de deux des trois organes d'entrée et/ou de sortie par l'action d'au moins un premier moyen de poussée sur un moyen de solidarisation lors d'une diminution d'un des couples de sortie provoquée par une perte d'adhérence ou une mise en vitesses différentielles, caractérisé en ce que le différentiel comprend également au moins un second moyen de poussée dynamique antagoniste à l'action du premier moyen de poussée, le second moyen de poussée dynamique antagoniste étant arrangé pour être activé lors d'une mise en vitesses différentielles du différentiel.

Selon une particularité de réalisation, le différentiel à glissement limité est caractérisé en ce que le premier moyen de poussée agit sur l'effort axial de l'organe d'entrée.

Selon une autre particularité de réalisation, le différentiel à glissement limité de l'invention est caractérisé en ce que le différentiel comprend un arrangement générant, lors de la mise en vitesses différentielles du différentiel, au moins un frottement spécifique à cette mise en mouvement utilisé pour actionner un second moyen de poussée dynamique antagoniste.

Selon une autre particularité de réalisation, le différentiel à glissement limité de l'invention est caractérisé en ce que, le second moyen de poussée dynamique antagoniste forme une liaison avec l'organe de sortie présentant une vitesse différentielle et au moins un des autres organes du différentiel par l'intermédiaire d'au moins une rampe pour exercer un effort dynamique antagoniste généré par des frottements apparaissant lors d'une mise en vitesses différentielles du différentiel.

Selon une autre particularité de réalisation, le différentiel à glissement limité de l'invention est caractérisé en ce que le second moyen de poussée dynamique antagoniste est formé par un élément monté mobile en rotation par rapport à un planétaire du différentiel et/ou un moyeu qui lie le planétaire à un arbre de sortie du différentiel, cet élément mobile s'articulant grâce à une rampe fixe en rotation avec le planétaire et/ou un moyeu du différentiel.

Selon une spécificité de cette particularité de réalisation, le différentiel à glissement limité de l'invention est caractérisé en ce que le second moyen de poussée dynamique antagoniste comporte au moins un point d'articulation en appui contre une rampe d'un moyeu du différentiel.

Selon un détail de cette spécificité, le différentiel à glissement limité de l'invention est caractérisé en ce que le point d'articulation fait intervenir un ergot.

Selon une autre spécificité de cette particularité, le différentiel à glissement limité de l'invention est caractérisé en ce que le second moyen de poussée dynamique antagoniste comporte au moins un point d'articulation en appui contre une rampe d'un planétaire du différentiel.

Selon une autre spécificité de cette particularité, le différentiel à glissement limité de l'invention est caractérisé en ce que le second moyen de poussée dynamique antagoniste comporte au moins un point d'articulation en appui contre une rampe d'un élément monté fixe en rotation avec un planétaire et/ou un moyeu du différentiel.

Selon une particularité de réalisation, le différentiel à glissement limité de l'invention est caractérisé en ce que le planétaire entraîne en rotation le moyeu monté mobile en translation par rapport au planétaire, le moyeu comportant au moins un troisième moyen de poussée antagoniste formé par au moins une paire de rampes arrangées en forme d'un « V » de sorte que la jonction des rampes forme une pointe orientée en direction du planétaire pour coopérer avec les rampes du planétaire.

Selon une autre particularité de réalisation, le différentiel à glissement limité de l'invention est caractérisé en ce que le satellite entraîne en rotation le planétaire monté mobile en translation par rapport à l'axe de rotation du satellite, l'axe de rotation du satellite étant fixe en rotation avec l'organe d'entrée, le planétaire comportant au moins un troisième moyen de poussée antagoniste formé par au moins une paire de rampes arrangées en forme d'un « V » de sorte que la jonction des rampes forme une pointe orientée en direction du satellite pour coopérer avec les rampes du satellite.

Selon une autre particularité de réalisation, le différentiel à glissement limité de l'invention est caractérisé en ce que le second moyen de poussée dynamique antagoniste est formé par un anneau centré sur l'axe de rotation d'une sortie du différentiel, cet anneau étant positionné de façon à être en mesure de transférer un effort axialement le long d'un logement séparant le boîtier du différentiel et le moyeu de l'arbre de sortie, pour s'appuyer par une première extrémité contre la face d'un organe du différentiel orientée vers la sortie du différentiel.

Selon une autre particularité de réalisation, le différentiel à glissement limité de l'invention est caractérisé en ce que le second moyen de poussée dynamique antagoniste est arrangé pour que sa rotation soit limitée grâce à au moins un ergot destiné à être en contact avec au moins un limiteur fixe en rotation avec un planétaire et/ou un moyeu du différentiel.

Selon une autre particularité de réalisation, le différentiel à glissement limité de l'invention est caractérisé en ce que le différentiel comprend au moins une liaison frottante susceptible d'être mise en pression par un effort axial de l'organe d'entrée selon un sens opposé au sens de poussée du second moyen de poussée dynamique antagoniste, la liaison frottante comprenant au moins un disque monté fixe en rotation avec le second moyen de poussée dynamique antagoniste.

Selon une autre particularité de réalisation, le différentiel à glissement limité de l'invention est caractérisé en ce que le différentiel comprend au moins une liaison frottante susceptible d'être mise en pression par un effort axial du second moyen de poussée dynamique antagoniste sous l'action d'une rampe.

Selon une autre particularité de réalisation, le différentiel à glissement limité de l'invention est caractérisé en ce qu'une partie du second moyen de poussée dynamique antagoniste comporte au moins une liaison frottante susceptible d'être mise en pression par un effort axial du moyeu selon un sens opposé au sens de poussée du second moyen de poussée dynamique antagoniste, de sorte que la diminution du couple en sortie de différentiel entraîne une augmentation de la pression du premier moyen de poussée contre le planétaire et/ou le moyeu.

Selon une spécificité de cette particularité de réalisation, le différentiel à glissement limité de l'invention est caractérisé en ce que les liaisons frottantes étant positionnées dans un arrangement du boîtier, ces liaisons sont formées par une disposition alternée de disques respectivement fixés à une partie du premier moyen de poussée et à une partie du boîtier du différentiel.

Selon une autre spécificité de cette particularité de réalisation, le différentiel à glissement limité de l'invention est caractérisé en ce que les liaisons frottantes étant positionnées dans un arrangement du boîtier, ces liaisons frottantes comprennent au moins un disque monté fixe en rotation à une partie du boîtier par l'intermédiaire d'une roue libre.

Selon une autre particularité de réalisation, le différentiel à glissement limité de l'invention est caractérisé en ce que le second moyen de poussée dynamique antagoniste est monté formé par un élément centré sur l'axe de rotation d'une sortie du différentiel, ce second moyen de poussée dynamique antagoniste comprenant au moins une rampe pour combiner une rotation du moyen de poussée dynamique antagoniste et produire axialement un effort antagoniste au niveau d'une face appuyée contre un élément du différentiel fixe en rotation avec l'organe d'entrée.

Selon une alternative de réalisation, le différentiel à glissement limité de l'invention est caractérisé en ce que le second moyen de poussée dynamique antagoniste est entraîné en rotation par frottement par un planétaire et/ou un élément fixe en rotation avec un planétaire au niveau d'une de ses faces, autour d'un axe parallèle à l'axe de rotation de l'organe de sortie, de sorte qu'une rotation du second moyen de poussée dynamique antagoniste par rapport à l'organe d'entrée génère une translation axiale du second moyen de poussée dynamique antagoniste qui augmente la force de pression du second moyen de poussée dynamique antagoniste sur le planétaire.

Selon une spécificité de cette alternative de réalisation, le différentiel à glissement limité de l'invention est caractérisé en ce que le second moyen de poussée dynamique antagoniste est monté rotatif sur un axe de guidage, l'axe de guidage étant d'une part perpendiculaire au plan des axes de rotation des satellites, d'autre part libre en rotation par rapport au différentiel et l'axe de guidage comportant au moins un pas de vis arrangé pour interagir avec le second moyen de poussée dynamique antagoniste afin de produire un mouvement combiné de rotation du second moyen de poussée dynamique antagoniste avec une translation axiale de ce second moyen de poussée.

Selon une autre alternative de réalisation, le différentiel à glissement limité de l'invention est caractérisé en ce que le second moyen de poussée dynamique antagoniste est entraîné en rotation au niveau d'une face intérieure en regard de l'axe de rotation d'un planétaire, par frottement avec un planétaire et/ou un élément monté fixe en rotation avec un planétaire, une extrémité en périphérie du second moyen de poussée comportant une rampe qui interagit avec un moyen de traction solidaire d'un plateau de pression annulaire montée libre en translation dans le boîtier du différentiel de façon à générer une force dynamique antagoniste à l'effort ou déplacement du plateau de pression lors d'une mise en vitesses différentielles du différentiel.

Selon une spécificité de cette alternative de réalisation, le différentiel à glissement limité de l'invention est caractérisé en en ce que le planétaire et/ou l'élément fixe en rotation avec le planétaire est monté mobile en translation axiale par rapport à l'axe d'au moins un satellite du différentiel, sous l'action d'au moins un troisième moyen de poussée antagoniste formé par des rampes.

Selon une autre alternative de réalisation, le différentiel à glissement limité de l'invention est caractérisé en ce que le second moyen de poussée dynamique antagoniste est monté libre en rotation par rapport à un satellite sur un axe commun avec le satellite de façon à être entraîné par frottement par le satellite, le second moyen de poussée dynamique antagoniste étant arrangé pour que sa rotation, lors de la mise en vitesses différentielles du différentiel, interagit avec un moyen de traction monté fixe en translation avec un plateau de pression annulaire de façon à générer une force dynamique antagoniste à l'effort ou déplacement du plateau de pression lors d'une mise en vitesses différentielles du différentiel.

Selon une spécificité de cette alternative de réalisation, le différentiel à glissement limité de l'invention est caractérisé en ce que le second moyen de poussée dynamique antagoniste comporte au moins un évidement dans lequel une partie du moyen de traction est amenée à coulisser de façon à se translater selon un axe parallèle à l'axe des organes de sortie lors de la rotation du second moyen de poussée dynamique antagoniste.

Selon une autre spécificité de cette alternative de réalisation, le différentiel à glissement limité de l'invention est caractérisé en ce que le second moyen de poussée dynamique antagoniste comporte au moins un évidement dont une extrémité forme une butée qui appui contre une partie d'au moins un moyen de traction de façon à amener le moyen de traction en translation selon un axe parallèle à l'axe des organes de sortie lors de la rotation du moyen de poussée dynamique

Selon une particularité de réalisation, le différentiel à glissement limité de l'invention est caractérisé en ce que l'entraînement en rotation différentielle d'un élément mobile monté fou par le second moyen de poussée dynamique provoque un effort axial antagoniste à l'effort du moyen de poussée de la sortie opposée du différentiel, l'élément mobile monté fou subissant un couple de frottement avec un élément du différentiel lorsqu'il est entrainé en rotation différentielle.

Selon une spécificité de cette particularité de réalisation, le différentiel à glissement limité de l'invention est caractérisé en ce que le moyeu et/ou l'élément mobile s'articulent avec le second moyen de poussée dynamique grâce à des rampes respectives.

L'invention, avec ses caractéristiques et avantages, ressortira plus clairement à la lecture de la description faite en référence aux dessins annexés dans lesquels :
- les figures 1 a et 1b représentent schématiquement le fonctionnement d'un différentiel à glissement limité selon l'art antérieur,
- la figure 2a représente une section d'un premier mode de réalisation particulier de l'invention selon un plan de symétrie intégrant l'axe de rotation des sorties du différentiel, la figure 2b représente un déroulement de l'interaction du second moyen de poussée avec un planétaire et son moyeu,
- la figure 3a représente une section d'une variante du premier mode de réalisation particulier de l'invention selon un plan de symétrie intégrant l'axe de rotation des sorties du différentiel, la figure 3b représente un déroulement de l'interaction du second moyen de poussée avec un planétaire,

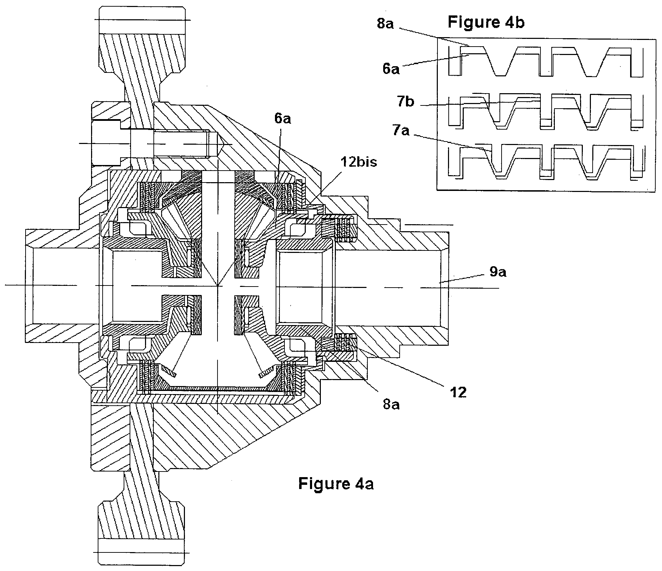

- la figure 4a représente une section d'une variante du premier mode de réalisation particulier de l'invention selon un plan de symétrie intégrant l'axe de rotation des sorties du différentiel, la figure 4b représente un déroulement de l'interaction du second moyen de poussée avec une liaison frottante supplémentaire,

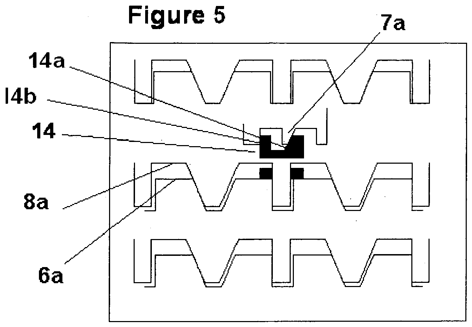

- la figure 5 représente un déroulement de l'interaction du second moyen de poussée avec une pièce intermédiaire supplémentaire montée sur un planétaire,
- la figure 6a représente une section d'un second mode de réalisation particulier de l'invention selon un plan de symétrie intégrant l'axe de rotation des sorties du différentiel, les figures 6b et 6c représentent un déroulement de l'interaction du second moyen de poussée avec l'axe de guidage qui lui impose une translation,
- la figure 7a représente une section d'un troisième mode de réalisation particulier de l'invention selon un plan de symétrie intégrant l'axe de rotation des sorties du différentiel, la figure 7b représente un déroulement de l'interaction du second moyen de poussée avec les moyens de tractions des plateaux de pression du différentiel,
- la figure 8a représente une section d'un quatrième mode de réalisation particulier de l'invention selon un plan de symétrie intégrant l'axe de rotation des sorties du différentiel, la figure 8b représente un déroulement de l'interaction du second moyen de poussée avec les plateaux de pression du différentiel selon une première variante et la figure 8c représente un déroulement de l'interaction du second moyen de poussée avec les plateaux de pression du différentiel selon une seconde variante,
- les figures 9a1 et 9a2 représentent respectivement une section d'un cinquième mode de réalisation particulier de l'invention selon un plan de symétrie intégrant l'axe de rotation des sorties du différentiel lors d'un fonctionnement avec une perte de couple résistant sur une sortie, référencée i sur la figure 9a1, et lors d'un fonctionnement en vitesses différentielles du dispositif sur la figure 9a2,
- les figures 9b1 et 9b2 représentent respectivement une section du mode de réalisation du dispositif de l'invention selon un plan passant par l'axe C-C', dans les situations représentées sur la figure 9a1 et sur la figure 9a2,
- les figures 9c1 et 9c2 représentent respectivement une section du mode de réalisation du dispositif de l'invention selon un plan passant par l'axe D-D' dans la situation représentée sur la figure 9a1 et sur la figure 9a2.

Il convient de noter que pour des raisons de clarté, les figures et les explications sont réalisées en présentant un jeu et un déplacement entre les différentes pièces. Ce jeu et certains de ces mouvements sont en fait absents lors du fonctionnement de l'invention, les pièces ne se déplacent pas les unes par rapport aux autres mais demeurent toutes en contact les unes aux autres. Ces déplacements sont là pour illustrer variations de forces modifiées, transmises ou déplacées au travers de ces pièces.

Le dispositif de l'invention concerne un différentiel formé d'un organe d'entrée munie d'une couronne (1) d'engrenage recevant le couple et le mouvement de rotation provenant du moteur et d'au moins deux sorties (9a, 9b) au niveau desquelles au moins un axe est entraîné en rotation. Selon un mode de réalisation particulier considéré dans le reste de la présente description mais non limitatif de l'invention, les axes des sorties (9a, 9b) sont alignés. La couronne (1) du différentiel est montée fixe avec un boîtier (2) et un couvercle (3) dans lequel est disposé un porte-disques (4). Ce porte-disques (4) présente la forme d'un cylindre monté fixe en rotation avec le boîtier (2) mais demeurant coulissant en translation selon l'axe des sorties (9a, 9b) du différentiel. Le porte-disques (4) interagit également au niveau d'une extrémité avec le couvercle (3) du différentiel. Ce différentiel comprend également au moins un satellite (5) arrangé pour pivoter autour d'un axe de rotation monté fixe avec le porte-disques (4) et le boitier (2). Associés à au moins un satellite (5) du différentiel, se trouve positionné également au moins un planétaire (6a, 6b) qui transmet notamment l'énergie de rotation à une sortie (9a, 9b) du différentiel.

A titre indicatif, bien que l'exemple décrit dans le présent document concerne classiquement un différentiel libre ou ouvert, cet exemple n'est pas limitatif et le dispositif selon l'invention pourra facilement être adapté sur un différentiel épicycloïdal tel que proposé, par exemple, dans la publication FR 2638500.

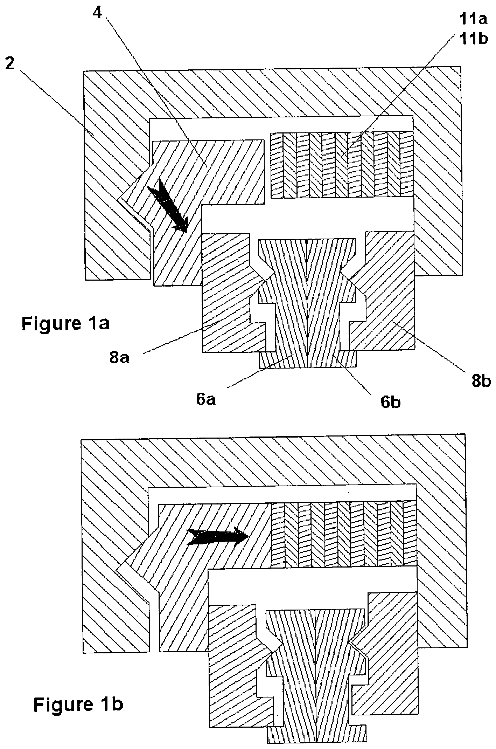

Selon un premier mode de réalisation particulier, la transmission de l'énergie de rotation du planétaire (6a, 6b) à l'axe de rotation de la sortie (9a, 9b) du différentiel s'effectue par l'intermédiaire d'un moyeu (8a, 8b) monté rotatif autour d'un axe commun au planétaire (6a, 6b) et à l'axe de la sortie (9a, 9b). Ce moyeu (8a, 8b) est monté fixe avec l'axe rotatif de la sortie (9a, 9b) et s'articule avec le planétaire (6a, 6b) grâce à un moyen de poussée antagoniste formé par un arrangement particulier de coopération mécanique représenté schématiquement sur la figure 1 entre ces deux pièces. Ce moyen de poussée antagoniste forme un troisième moyen de poussée dans le différentiel de l'invention.

L'ensemble formé par les différentes pièces du différentiel disposé dans le volume formé par le porte-disques (4) et le boîtier (2), est maintenu en pression selon un axe sensiblement parallèle à l'axe des sorties (9a, 9b) du différentiel. Cette mise en pression est notamment assurée et maintenue par un premier moyen de poussée, c'est-à-dire des rampes (10) à l'extrémité du porte-disques (4) qui interagit avec le couvercle (3), le porte-disques (4) étant susceptible de coulisser dans le boîtier (2) pour conserver cette pression en rejoignant le fond du boîtier (2). Chacune des extrémités du porte-disques (4) comprend des embrayages (11a, 11b) formés d'une pluralité de disques coulissant en translation et fixes en rotation par rapport au porte-disques (4) arrangés alternativement avec une pluralité de disques fixes en rotation par rapport au planétaire (6a, 6b) respectif sur lequel ces derniers coulissent en translation. Le coulissement du porte-disques (4) dans le boîtier (2) augmente alors la pression exercée sur les embrayages (11a, 11b) et solidarise de façon progressive avec ce coulissement du porte-disques (4), la rotation des planétaires (6a, 6b) avec la rotation du porte-disques (4), du boîtier (2) et de la couronne (1) du différentiel.

L'arrangement de coopération mécanique entre le moyeu (8a, 8b) et le planétaire (6a, 6b), qui réalise le troisième moyen de poussée antagoniste, permet d'une part un entraînement en rotation du moyeu (8a, 8b) par le planétaire (6a, 6b) et d'autre part un écartement du moyeu (8a, 8b) et du planétaire (6a, 6b) lorsque l'axe rotatif de la sortie (9a, 9b) présente un couple de résistance. Dans un exemple de réalisation non limitatif, cet arrangement coopératif est formé, par une succession de rampes positionnées à la périphérie du moyeu (8a, 8b) pour s'articuler avec leurs pendantes disposées sur la périphérie du planétaire (6a, 6b). Un autre arrangement peut être formé par des rampes appartenant à un des éléments, moyeu ou planétaire, et coopérant avec au moins une pièce intermédiaire solidaire de l'autre élément, respectivement planétaire ou moyeu. Selon un mode de réalisation préféré, les rampes du moyeu (8a) sont arrangées pour présenter la forme d'un « V » de sorte que la jonction d'une paire de rampes forme une pointe orientée en direction du planétaire (6a). Ainsi, une rampe du moyeu (8a, 8b) s'articule avec une rampe du planétaire (6a, 6b) de façon à permettre, soit une rotation, soit une rotation combinée à une translation. Cet écartement entre moyeux (8a, 8b) et planétaires (6a, 6b) tend à s'opposer à la pression axiale du porte-disques (4) sur les pièces du différentiel. Lors d'une diminution du couple de l'axe de rotation d'une sortie (9a, 9b), l'écartement entre le moyeu (8a, 8b) et le planétaire (6a, 6b) diminue du fait de la pression axiale exercée par le porte-disques (4) sur les pièces du différentiel. Le maintien de la pression axiale du différentiel est assuré grâce à un coulissement progressif du porte-disques (4) dans le boîtier (2), qui entraîne simultanément une solidarisation progressive des planétaires (6a, 6b) avec la rotation du porte-disques (4), du boîtier (2) et de la couronne (1) du différentiel par compression des embrayages (11a, 11b).

Le dispositif selon l'invention a pour objet de générer une force antagoniste au glissement permettant la solidarisation du différentiel lors de la mise en vitesses différentielles du différentiel, et éventuellement de compenser la perte de vitesse fournie à un axe de sortie (9a, 9b) en rotation positive par rapport au boîtier (2) du fait d'une perte de vitesse de rotation d'un planétaire (6a, 6b) suite à des pertes d'énergie dues aux frottements mécaniques des troisièmes moyens de poussée antagoniste du différentiel. La vitesse de rotation de l'axe de sortie (9a, 9b) du différentiel se trouve alors supérieure à celle du planétaire (6a, 6b) qui lui correspond, et est détecté par le différentiel à glissement limité comme une diminution du couple au niveau de l'axe de sortie (9a, 9b).

Le dispositif selon l'invention s'appuie sur l'utilisation d'un second moyen de poussée dynamique arrangé d'une part pour exercer une pression antagoniste à la pression fournie par le premier moyen de poussée sur le porte-disques (4) et sur les éléments du différentiel et s'opposer au glissement progressif du porte-disques (4) dans le boîtier (2) et donc à la mise en pression des embrayages (11a, 11b) et à la solidarisation en rotation des planétaires (6a, 6b) avec le porte-disques (4) et le boîtier (2) et d'autre part pour, si besoin est, pour fournir un effort dynamique complémentaire à des moyens de poussée antagonistes existants.

De façon préférentielle, le mode de réalisation privilégiera un différentiel dont le second moyen de poussée dynamique antagoniste agissant prioritairement sur l'axe de sortie dont la vitesse différentielle est positive, c'est-à-dire dont l'axe de sortie correspond à la roue extérieure lors d'une trajectoire courbe.

Selon un mode de réalisation particulier, non limitatif du principe de l'invention, adapté pour la détection d'une perte d'adhérence ou d'une mise en vitesses différentielles, cet effet est obtenu par le second moyen de poussée dynamique antagoniste (7) annulaire cylindrique centré sur l'axe de rotation de l'organe de sortie (9a) concerné. Ce second moyen de poussée dynamique antagoniste (7) est positionné dans un logement (13) du boîtier (2) du différentiel de façon à pouvoir effectuer d'une part une rotation axiale autour de l'organe de sortie (9a) et d'autre part une translation axiale le long de ce même axe.

Le second moyen de poussée dynamique antagoniste (7) selon l'invention présente une première face orientée contre le boîtier (2) et une seconde face orientée contre le moyeu (8a) associé à l'organe de sortie (9a). Ce second moyen de poussée dynamique antagoniste (7) présente également une première extrémité extérieure à son logement (13) et qui est susceptible de s'appuyer contre un des éléments du différentiel, préférentiellement contre le planétaire (6a) qui s'articule avec le moyeu (8a). Ce point d'appui du second moyen de poussée dynamique antagoniste (7) sur le différentiel crée une pression produisant une force antagoniste au glissement du porte-disques (4) dans le boîtier (2).

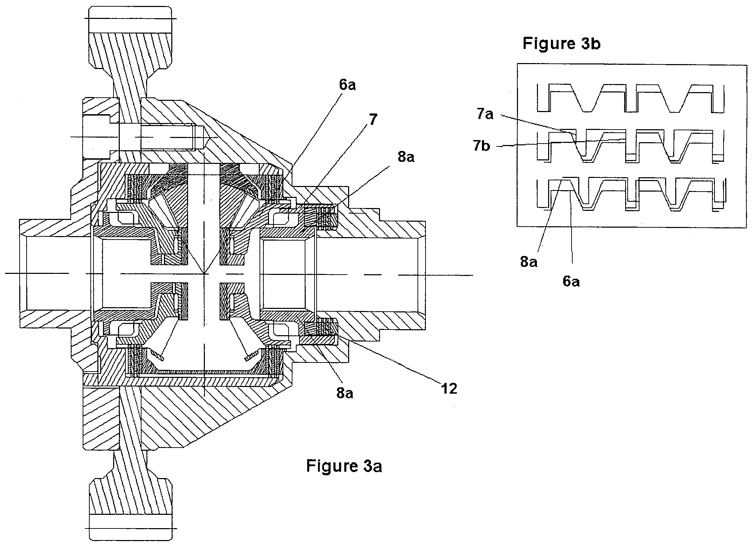

Selon un mode de réalisation particulier, le point d'appui du second moyen de poussée dynamique antagoniste (7) sur le différentiel contre le planétaire (6a) est réalisé par un ou plusieurs ergots (7a) destinés à être insérés contre une ou plusieurs rampes du planétaire (6a), comme illustré sur la figure 3a. Ces ergots (7a) solidaires du moyen de poussée (7), sont alors entraînés en rotation par les rampes du planétaire (6a) tout en générant un déplacement axial dans le sens de glissement du porte-disques (4). Par ailleurs, ce positionnement de l'ergot (7a) contre une rampe permet de générer une résistance supplémentaire en rotation en s'associant au moyeu (8a) qui s'oppose au couple de rotation du planétaire (6a).

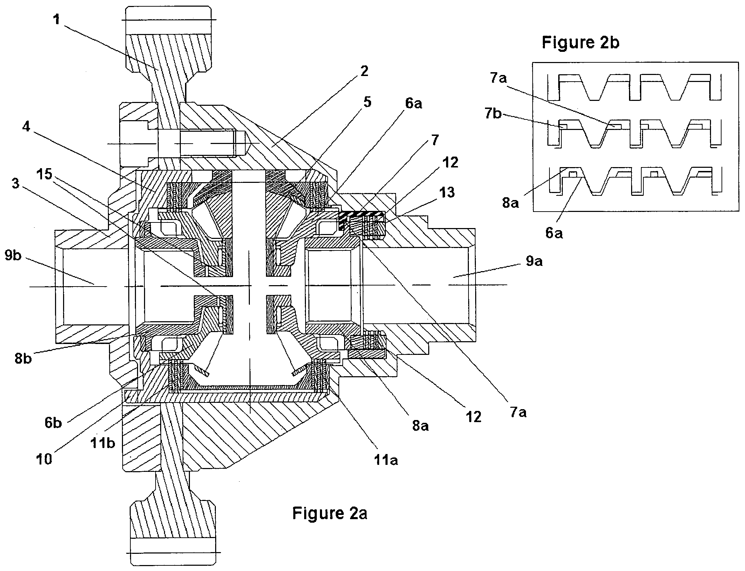

Selon un autre mode de réalisation particulier, au niveau de cette extrémité, le second moyen de poussée dynamique antagoniste (7) comprend un ou plusieurs ergots (7a) destinés à être insérés entre le planétaire (6a) et son moyeu (8a), comme illustré sur la figure 2a. Ces ergots (7a) sont solidaires du second moyen de poussée dynamique antagoniste (7), arrangé d'une part pour être entraînés en rotation soit par le planétaire (6a) ou son moyeu (8a) et d'autre part, du fait de la présence de rampes sur le planétaire et le moyeu, générer un déplacement axial dans un sens antagoniste au sens de glissement du porte-disques (4). Par ailleurs, le positionnement de l'ergot (7a) contre une rampe permet de générer une résistance en rotation eh s'associant au moyeu (8a) pour s'opposer au couple de rotation du planétaire (6a).

Selon un arrangement particulier, l'engrenage entre le moyeu (8a) et le planétaire (6a) est formé par une succession alternée de rampes et de limiteurs positionnées à la périphérie du moyeu (8a) pour s'articuler avec leurs pendants disposés sur la périphérie du planétaire (6a). Ces limiteurs restreignent d'une part la rotation du moyeu (8a) par rapport au planétaire (6a) et d'autre part la rotation du second moyen de poussée dynamique antagoniste (7) en bloquant au moins un de ses ergots (7a) dans son débattement en rotation.

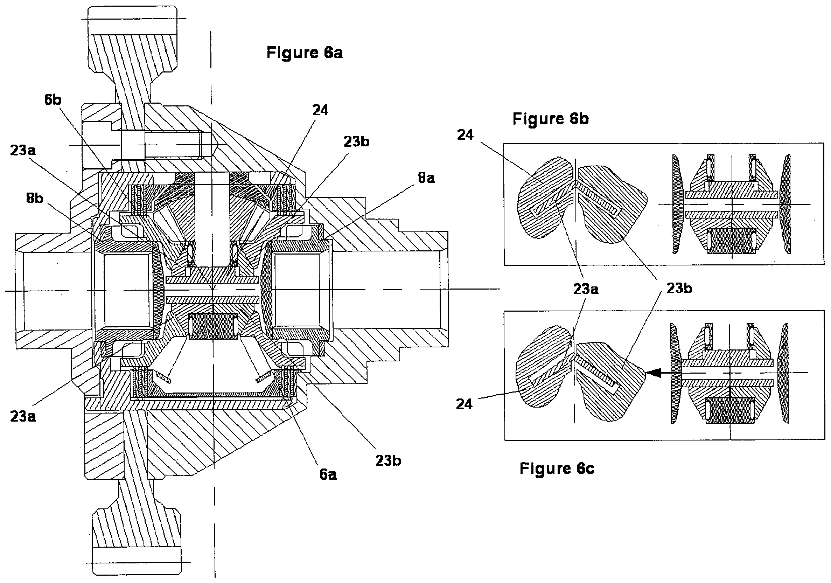

Selon un autre mode de réalisation particulier, l'extrémité du second moyen de poussée dynamique antagoniste (7) comporte au moins un point d'articulation formé par un ergot (7a) en appui contre une rampe d'une pièce particulière (14) formant un élément monté fixe en rotation avec un planétaire (6a) et/ou un moyeu (8a) du différentiel par une de ses parties, une autre partie comportant une rampe (14a) contre laquelle un ergot (7a) du second moyen de poussée dynamique antagoniste (7) est en appui. Selon une configuration particulière, le débattement en rotation de l'ergot (7a) est restreint par le positionnement de limiteurs particuliers (14b) sur la pièce montée fixe avec le planétaire et/ou le moyeu. Selon une alternative de configuration, représentée sur la figure 6, ces limiteurs particuliers (7b) sont directement portés par le second moyen de poussée dynamique antagoniste (7).

La seconde extrémité du second moyen de poussée dynamique antagoniste (7) reste positionnée dans le logement (13). Cette extrémité comporte une pluralité de disques mobiles en translation et centrés sur le même axe que le second moyen de poussée dynamique antagoniste (7). Ces disques fixes en rotation avec le second moyen de poussée dynamique antagoniste (7) sont disposés alternativement avec une pluralité de disques mobiles en translation et montés fixes en rotation par rapport au boîtier (2) du différentiel, de façon à former des liaisons frottantes (12) permettant un ralentissement de la rotation axiale du second moyen de poussée dynamique antagoniste (7) lorsque ces liaisons frottantes (12) sont mises en pression.

Les liaisons frottantes (12) formées par un arrangement alterné de disques se trouvent positionnées entre le fond du logement (13) du second moyen de poussée dynamique antagoniste (7) dans le boîtier (2) et une surface du moyeu (8a). Ce positionnement particulier fait en sorte que lorsque le moyeu (8a) s'écarte du planétaire (6a) qui lui est associé, c'est-à-dire lorsque le moyeu (8a) est entraîné en rotation par le planétaire (6a) et que la vitesse de rotation de l'axe de sortie (9a) est identique à celle du boîtier (2), le moyeu (8a) appui sur les liaisons frottantes (12) et exerce un ralentissement de la rotation du second moyen de poussée dynamique antagoniste (7). Ce ralentissement de la rotation du second moyen de poussée dynamique antagoniste (7) forme une résistance supplémentaire au couple de rotation du moyeu (8a) et de l'arbre de sortie et entraîne concomitamment le ralentissement de la rotation du moyeu (8a) permettant simultanément de compenser les pertes d'efforts axiaux antagonistes dues aux pertes d'énergie mécanique lors de la mise en rotation différentielle notamment sur l'axe de sortie (9a) qui présente une vitesse de rotation positive par rapport à l'organe d'entrée formé par la couronne (1), le boîtier (2) et le porte-disques (4).

Selon une particularité de réalisation, le second moyen de poussée dynamique antagoniste (7) comprend une liaison frottante (12bis) susceptible d'être mise en pression par un déplacement axial de l'organe d'entrée selon un sens opposé au sens de poussée du second moyen de poussée dynamique antagoniste (7). Cette liaison frottante particulière fait intervenir notamment au moins un anneau (12bis) arrangé pour présenter une première surface périphérique plane qui est en appui contre une extrémité du boîtier (2) et une seconde surface fixe, notamment en rotation, avec le second moyen de poussée dynamique antagoniste (7). Une extrémité de l'organe d'entrée ou du porte-disques (4) qui comprend notamment un moyen de mise en pression (15) destiné à appuyer sur la première surface de la liaison frottante (12bis) pour la mettre en pression. Dans ce mode de réalisation, la diminution du couple en sortie de différentiel entraîne un déplacement du porte-disques (4) dans le boîtier (2) et simultanément une augmentation de la pression du moyen de mise en pression (15) contre la surface de la liaison frottante (12bis), ralentissant la rotation du second moyen de poussée dynamique antagoniste (7) et ralentissant la rotation plus rapide du moyeu (8a) par rapport au planétaire (6a). La liaison frottante (12bis) de ce mode de réalisation peut être opérée seule ou bien en combinaison avec les liaisons frottantes (12) entre le second moyen de poussée dynamique antagoniste (7) et le boîtier (1).

Selon un mode de réalisation spécifique, les liaisons frottantes (12) entre le second moyen de poussée dynamique antagoniste (7) et le boîtier (2) sont positionnées de sorte que les disques montés avec le boîtier (2) sont fixés par l'intermédiaire d'une roue libre (15) qui relie les disques au boîtier (2). Cette roue libre (15) est arrangée de préférence pour que sa rotation soit bloquée lorsque les frottements sont dus à une rotation positive des disques par rapport au boîtier (2), de sorte que les disques se trouvent alors fixés en rotation avec le boîtier (2). Inversement, lorsque les frottements sont dus à une rotation négative des disques par rapport au boîtier (2), l'action des liaisons frottantes (12) ou la perte d'énergie due aux frottements est réduite puisque les disques montés sur le boîtier (2) sont mobiles en rotation par rapport au boîtier (2). Cette roue libre (15) permet ainsi d'imposer un fonctionnement du système de l'invention uniquement lorsqu'une perte d'adhérence ou une mise en vitesse différentielle positive est détectée au niveau de l'axe de sortie (9a).

Selon un mode de réalisation particulier, les liaisons frottantes (12, 12bis) du dispositif de l'invention peuvent mettre en jeu des rondelles Belleville qui assure une pression axiale minima et permanente.

En revanche, lorsque le planétaire (6a) transmet un couple moteur au moyeu (8a) par l'intermédiaire des troisièmes moyens de poussée antagoniste, il en résulte un effort antagoniste qui s'exerce sur les liaisons frottantes (12) qui sont susceptibles de mettre en jeu le second moyen de poussée dynamique (7) antagoniste lors de la mise en vitesses différentielles du dispositif..

Il convient de faire remarquer que bien que ce mode de réalisation ne soit représenté sur la figure 2a que pour une seule sortie du différentiel, ce mode de réalisation est applicable au deux sorties.

Un mode de réalisation alternatif de l'invention peut être réalisé grâce à un second moyen de poussée dynamique antagoniste (15) circulaire centré sur l'axe de rotation de l'organe de sortie (9b) concerné. Ce second moyen de poussée dynamique antagoniste (15) est positionné de façon être entraîné en rotation par le moyeu (8b), lui-même entraîné en rotation par le planétaire (6b) correspondant. Cet entraînement est réalisé en faisant intervenir des rampes selon un arrangement symétrique avec l'arrangement planétaire (6a)/moyeu (8a) précédemment décrit par rapport au plan de symétrie formé par le plan comprenant les axes de rotation des satellites (5a, 5b). Toutefois, contrairement à son équivalent symétrique, le moyeu (8b) est bloqué dans son déplacement axial par des butées du couvercle (3) contre lequel le moyeu (8b) s'articule en rotation par un roulement à aiguille pour éviter tout frottement. Le second moyen de poussée dynamique antagoniste (15) est, lui, mis en rotation par le moyeu (8b) au niveau d'une première face par l'intermédiaire d'un entraînement faisant intervenir des rampes de sorte que le second moyen de poussée dynamique antagoniste (15) reçoit une force axiale lorsqu'il est mis en rotation. Ce second moyen de poussée dynamique antagoniste (15) est également positionné entre une partie du planétaire (5b) et un élément fixe en rotation avec les axes des satellites (5a, 5b) du différentiel, de sorte que ce second moyen de poussée dynamique antagoniste (15) demeure fixe en translation avec le planétaire (5b), le porte-disques (4) et les satellites (5a, 5b) et que la force axiale qu'il reçoit lors de sa mise en rotation entraîne une augmentation du frottement du second moyen de poussée dynamique antagoniste (15) au niveau d'une seconde face appuyée contre un élément fixe du différentiel, par exemple les axes des satellites (5a, 5b). Selon un mode de réalisation préféré, lorsque la rotation du second moyen de poussée dynamique antagoniste (15) est assurée par le moyeu (8b), les frottements qui seraient susceptibles d'exister entre le second moyen de poussée dynamique antagoniste (15) et le planétaire (6b) sont supprimés par un roulement à aiguilles adapté.

Lors d'une mise en vitesse différentielle positive au niveau de l'organe de sortie (9b), les frottements internes au différentiel entraînent des pertes de couple moteur sur cet axe de sortie (9b). Le second moyen de poussée dynamique antagoniste (15) génère un effort dynamique antagoniste dépendant du frottement en rotation de ce second moyen de poussée dynamique antagoniste (15). Cette augmentation du frottement entraîne concomitamment un ralentissement de la vitesse de rotation du moyeu (8b) par rapport au planétaire (6b), et donc sous l'action des rampes entre le moyeu (8b) et le planétaire (6b) d'une part et entre le moyeu (8b) et le second moyen de poussée dynamique antagoniste d'autre part, un écartement de ces différentes pièces qui s'oppose au glissement du porte-disques (4) dans le boîtier (1) sous l'action de ses rampes (10).

Il convient de faire remarquer que bien que ce mode de réalisation ne soit représenté sur la figure 2a que pour une seule sortie du différentiel, ce mode de réalisation est applicable au deux sorties.

Selon une alternative de réalisation, chacun des moyeux (8a, 8b) est intégré à son planétaire (6a, 6b) respectif. Chacun des planétaires (8a, 8b) est ainsi monté mobile en translation axiale par rapport à l'organe d'entrée, au porte-disques (4) et aux satellites (5a, 5b). L'arrangement entre les planétaires (6a, 6b) et les satellites (5a, 5b) fait intervenir des rampes selon une disposition similaire aux mécanismes d'entraînement entre les moyeux (8a, 8b) et les planétaires (6a, 6b), précédemment décrits pour les autres modes de réalisation. Dans cette alternative de réalisation, la force de déplacement latérale positionnée initialement entre le planétaire (6a, 6b) et le moyeu (8a, 8b), est déportée entre les satellites (5a, 5b) et le planétaire (6a, 6b). Le second moyen de poussée dynamique antagoniste (7) interagit alors directement, par son extrémité, sur le planétaire (6a).

Dans une variante de l'invention formant un deuxième mode de réalisation particulier, où la structure générale du dispositif, du boîtier et des porte-disques, est sensiblement similaire à celle de la variante formant le premier mode de réalisation particulier, les seconds moyens de poussée dynamiques antagonistes (23a, 23b) du différentiel à glissement sont formés par une paire d'éléments (23a, 23b) montés symétriquement par rapport à un plan de symétrie passant par les axes de rotation des satellites (5a, 5b) du différentiel. Les axes de rotations des satellites (5a, 5b) sont des demi-axes pour permettre le positionnement d'un axe de guidage (24) des seconds moyens de poussée dynamiques antagonistes qui traverse perpendiculairement le plan formé par les axes de rotation des satellites (5a, 5b). Ces seconds moyens de poussée (23a, 23b) sont montés sur leur axe de guidage (24) qui les traverse. Ces seconds moyens de poussée dynamiques antagonistes (23a, 23b) sont arrangés de façon à pouvoir opérer une rotation axiale libre par rapport aux satellites (5a, 5b), au porte-disques (4) et au boîtier (2). Chacun de ces seconds moyens de poussée dynamiques antagonistes (23a, 23b) comprend une face en contact avec une face d'un planétaire (8a, 8b) respectif, de sorte que la rotation du planétaire (6a, 6b) entraîne par frottement la rotation du second moyen de poussée dynamique antagoniste (23a, 23b) sur son axe de guidage (24). L'axe de guidage (24) comprend deux pas de vis (24a, 24b) respectivement disposés symétriquement l'un par rapport à l'autre de part et d'autre du plan de symétrie passant par les axes de rotation des satellites (5a, 5b) du différentiel. Chacun de ces pas de vis (24a, 24b) est respectivement arrangé pour s'articuler avec un taraudage dans l'alésage de l'axe de rotation d'un second moyen de poussée dynamique antagoniste (23a, 23b) respectif de sorte que la rotation d'un second moyen de poussée dynamique antagoniste (23a, 23b) par rapport à l'axe de guidage (24) entraîne une translation axiale du second moyen de poussée dynamique antagoniste (23a, 23b) contre son planétaire (6a, 6b) respectif. De plus, afin de limiter tous les frottements parasites, les seconds moyens de poussée dynamique antagoniste (23a, 23b) s'articulent avec les autres pièces qui les entourent par des roulements à aiguilles. Ainsi, lorsque les planétaires (6a, 6b) sont en rotation avec l'organe d'entrée, ils entraînent en rotation par frottement les seconds moyens de poussée dynamiques antagonistes (23a, 23b) avec leur axe de guidage (24). Lorsque le dispositif est en vitesses différentielles, les moyeux (8a, 8b), limités par le volume réalisé par le boîtier (1) et son couvercle (3), repoussent leurs planétaires (6a, 6b) vers le plan des axes de rotation des axes de satellites (5a, 5b), augmentant le frottement des planétaires (6a, 6b) contre les seconds moyens de poussée dynamiques antagonistes (23a, 23b). Du fait du jeu des pas de vis (24a, 24b), la rotation différentielle des seconds moyens de poussée dynamiques antagonistes (23a, 23b) entraîne un déplacement axial d'au moins un des seconds moyens de poussée dynamiques antagonistes (23a, 23b) qui écarte ces moyens dynamiques antagonistes (23a, 23b), et donc génère une force complémentaire à celle des rampes du système, qui, transmise au travers des pièces du système, s'oppose au glissement du porte-disques (4) dans le boîtier (2).

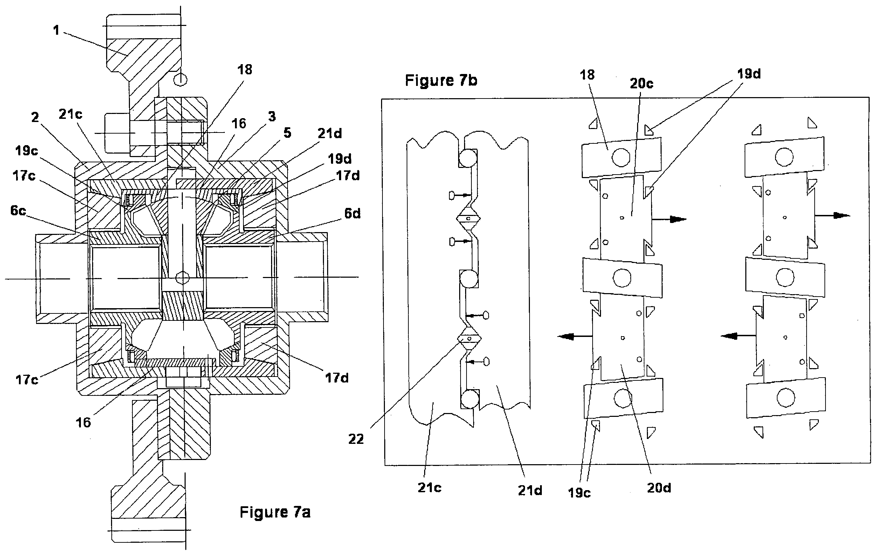

Dans une variante de réalisation de l'invention formant un troisième mode de réalisation particulier, le différentiel à glissement comprend des planétaires (6c, 6d) qui forment une même pièce avec leurs moyeux respectifs, comme présenté sur la figure 7a. Le différentiel selon cette variante de réalisation comprend un organe d'entrée (1) sur lequel est monté fixe en rotation une structure cylindrique, fixe en rotation avec le boîtier (2) et l'organe d'entrée, à l'intérieure de laquelle sont montés un ou plusieurs satellites (5a, 5b) auxquels des planétaires (6c, 6d) sont associés. Cette structure cylindrique (16) comprend une paroi formée par un arrangement alternatif de cavaliers (18) montés fixes en rotation et en translation au niveau et avec des axes des satellites (5a, 5b) et orientés selon l'axe du cylindre et d'éléments (20) fixes en rotation et mobiles en translations avec les axes des satellites (5a, 5b). Ces éléments (20) fixes en rotation et mobiles en translations sont des moyens de traction (20) fixés en translation et en rotation à un plateau de pression annulaires (21c, 21d) qui entoure la structure cylindrique (16). Ces moyens de traction (20) sont alternativement fixés sur l'un ou l'autre des plateaux de pression annulaires (21c, 21d). Les cavaliers (18) fixes en rotation et en translation sont arrangés pour formés des rampes pour les moyens de traction (20) et générer une force qui s'oppose à un écartement des plateaux de pressions (21c, 21d). Plus de détails concernant ces moyens de traction (20) est expliqué plus bas. Ce cylindre (16) est fermé de part et d'autre par des cônes (17c, 17d), de sorte chacun de ces cônes (17c, 17d) étant respectivement monté fixe en rotation avec le planétaire (6c, 6d) situé du même coté. Chacun de ces cônes (17c, 17d) est ainsi respectivement traversé par la partie d'un planétaire (6a, 6b) fixée à un organe de sortie. Le différentiel à glissement, selon ce mode de réalisation, est réalisé selon un plan de symétrie passant par la section du cylindre (16) qui comprend les axes de rotation des satellites (5a, 5b) du différentiel, montés fixes avec le boîtier (2) du différentiel. Le cylindre (16) du différentiel comprend sur sa surface périphérique deux plateaux de pression annulaires (21c, 21d) montés libres en rotation et en translation par rapport au cylindre (16) et disposé symétriquement de façon à présenter un premier bord, orienté vers le plan de symétrie du différentiel, et un second bord, libre qui recouvre au moins une partie de la périphérie du cône (17c, 17d) correspondant qui participe à la fermeture du cylindre (16). Par leur bord orienté vers la symétrie du différentiel, chacun de ces plateaux (21c, 21d) comprend une encoche destinée à s'articuler avec au moins une pièce (22) positionnée en saillie dans un logement du boîtier (2) dans le plan de symétrie du cylindre (16). Cette saillie (22) forme un premier moyen de poussée par une rampe sur laquelle l'encoche du bord de chacun des plateaux (21c, 21d) impose une translation au plateau (21c, 21d) qui l'écarte de son plan de symétrie en direction de son bord libre lorsque celui-ci est entraîné en rotation par rapport au cylindre (16). Ce déplacement des plateaux de pression (21c, 21d) dépendant du couple moteur appliqué par le boîtier (2). La translation des plateaux de pression (21c, 21d), et donc leur rotation, est toutefois freinée puis stoppée par le frottement du bord libre du plateau de pression (21c, 21d) contre la surface périphérique du cône (17c, 17d) dont le diamètre s'élargie par rapport au diamètre situé du coté du cylindre (16). La surface périphérique cône (17c, 17d), en bloquant la liberté de mouvement du plateau de pression (21c, 21d) par rapport au reste du différentiel, forme ainsi un moyen de solidarisation des organes de sortie entre eux et avec l'organe d'entrée. Par ailleurs, lors de la mise en vitesses différentielles des planétaires (6c, 6d) du différentiel, les cônes (17c, 17d) sont également mis en rotation de sorte que leur frottement, en s'opposant à la rotation du plateau de pression (21c, 21d), génère une force de poussée antagoniste au déplacement des plateaux de pression (21c, 21d).

Selon une particularité de ce mode de réalisation de l'invention, les planétaires (6c, 6d) sont arrangés pour être mobiles en translation axiale par rapport aux satellites (5a, 5b) montés fixes en rotation et en translation avec l'organe d'entrée. Les articulations entre les planétaires (6a, 6b) et les satellites (5a, 5b) font intervenir des dentures qui forment des V et qui jouent le rôle de rampes selon une disposition similaire aux mécanismes d'entraînement des moyeux (8a, 8b) par leurs planétaires (6a, 6b) dans les modes de réalisation précédemment décrits. Lors de l'entraînement équilibré des organes de sortie par l'organe d'entrée, les planétaires (6a, 6b) sont repoussés axialement jusqu'à une position limite de sorte qu'une de leur surface soit en appui contre une surface d'un second moyen de poussée dynamique antagoniste respectif (19c, 19d). Lorsque les planétaires sont entraînés en vitesse différentielle, une surface de chacun des planétaires (6c, 6d) s'articule en rotation par frottement avec la face inférieure d'un moyen de poussée (19c, 19d) respectif. Ce second moyen de poussée dynamique antagoniste (19c, 19d) est monté libre en rotation par rapport au cylindre (16) de façon à coulisser dans une rainure formée entre le bord du cylindre (16) et un cavalier (18) en appui contre le bord d'un cône (17c, 17d), lorsqu'il est entraîné par le frottement d'un planétaire (6c, 6d) en rotation. De façon à restreindre les frottements du second moyen de poussée dynamique antagoniste (19c, 19d) avec le cylindre (16), au moins une partie de ces frottements peut être supprimée par l'utilisation de roulements à aiguilles. Ce frottement est opéré lorsque le planétaire (6c, 6d) s'écarte en translation du plan de symétrie du différentiel, c'est-à-dire de l'axe de rotation des satellites (5a, 5b). La rotation des planétaires (6c, 6d) frotte la face inférieure du second moyen de poussée dynamique antagoniste (19c, 19d) qui est alors déplacé en rotation. Une partie de ce second moyen de poussée dynamique antagoniste (19c, 19d) comporte une rampe arrangée pour interagir avec une rampe portée par un moyen de traction antagoniste (20c, 20d) fixé en translation et en rotation à un des plateaux de pression annulaires (21c, 21d), de sorte que le déplacement de la rampe à l'extrémité du second moyen de poussée dynamique antagoniste (19) appui sur la rampe du moyen de traction (20) pour générer une force qui s'oppose à l'écartement du plateau de pression annulaire (21c, 21d) du plan de symétrie du différentiel.

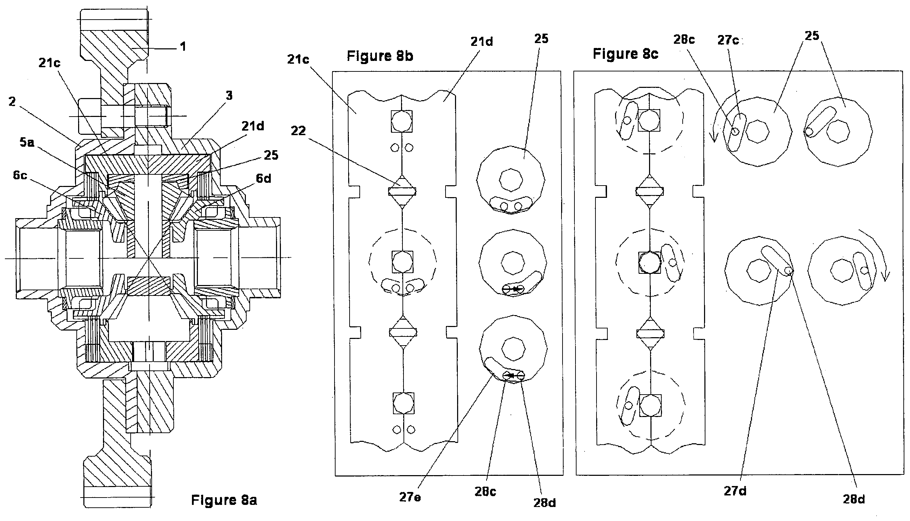

Dans une variante de réalisation de l'invention formant un quatrième mode de réalisation particulier présenté sur la figure 8a, le différentiel à glissement comprend une structure sensiblement similaire à la variante de réalisation de l'invention formant le troisième mode de réalisation particulier. Cependant, un (5a) des satellites est relié au cylindre (16) via une pièce intermédiaire (25), discale, coaxiale en rotation avec le satellite (5a), qui forme un second moyen de poussée dynamique antagoniste. Ce second moyen de poussée dynamique antagoniste (25) présente une première face en frottement avec le satellite (5a) et une seconde face au niveau de laquelle le frottement avec le cylindre (16) est limité, voire nulle grâce à un roulement. Ce second moyen de poussée dynamique antagoniste (25) est ainsi libre mobile en rotation par rapport au satellite (5a), bien qu'entraîné en rotation par frottement avec ce satellite (5a). De façon symétrique, chacun des plateaux de pression annulaires (21c, 21d) qui entoure le cylindre (16) comprend, à proximité du plan de symétrie qui passe par les axes de rotation des satellites (5a, 5b), une tige (28a, 28b) fixe en mouvement avec le plateau de pression annulaire (21c, 21d).

Selon une première particularité de réalisation, chacune des tiges (28c, 28d) traverse une ouverture de la surface du cylindre (16) pour interagir avec un évidement (27c, 27d) qui lui est propre dans un second moyen de poussée dynamique antagoniste (25) propre. Cet évidement (27c, 27d) du second moyen de poussée dynamique antagoniste (25) présente un agencement axial selon une corde du moyen de poussée (25) discal de sorte qu'un pivotement du second moyen de poussée dynamique antagoniste (25) sur son axe de rotation entraîne un déplacement de la tige (28c, 28d) et une translation du plateau de pression annulaire (21c, 21d) à laquelle elle est fixée. Ainsi, lors d'une mise en vitesses différentielles du dispositif de l'invention, le satellite (5a) est mis en rotation, entraînant par frottement la rotation du second moyen de poussée dynamique antagoniste (25). Le pivotement du second moyen de poussée dynamique antagoniste (25), par le pivotement de son évidement (27c, 27d), entraîne, via le déplacement de la tige (28c, 28d), une translation du plateau de pression annulaire (21c, 21d) avec son rapprochement du plan de symétrie du dispositif, en générant une force de poussée dynamique antagoniste à l'écartement des plateau de pression annulaire (21c, 21d).

Selon une seconde particularité de réalisation, les tiges (28c, 28d) traversent une ouverture de la surface du cylindre (16) pour interagir avec un même évidement (27e) dans le second moyen de poussée dynamique antagoniste (25). Cet évidement (27c) du second moyen de poussée dynamique antagoniste (25) présente une forme de section d'arc de cercle avec une butée à chacune de ses extrémités, de sorte qu'un pivotement du second moyen de poussée dynamique antagoniste (25) sur son axe de rotation génère un déplacement par un entraînement d'une des tiges (28c, 28d) par la butée de l'évidement (27e) et un rapprochement des deux tiges et donc une translation du plateau de pression annulaire (21c, 21d) à laquelle elle est fixée. Ainsi, comme pour la première particularité de réalisation, lors d'une mise en vitesses différentielles du dispositif de l'invention, le satellite (5a) est mis en rotation, entraînant par frottement la rotation du second moyen de poussée dynamique antagoniste (25). Le pivotement du second moyen de poussée dynamique antagoniste (25), par le pivotement de ses évidements (27c, 27d), entraîne, via le déplacement d'une des tiges (28c, 28d), une translation du plateau de pression annulaire (21c, 21d) avec leur rapprochement du plan de symétrie du dispositif, en générant une force de poussée dynamique antagoniste à l'écartement des plateau de pression annulaire (21c, 21d).

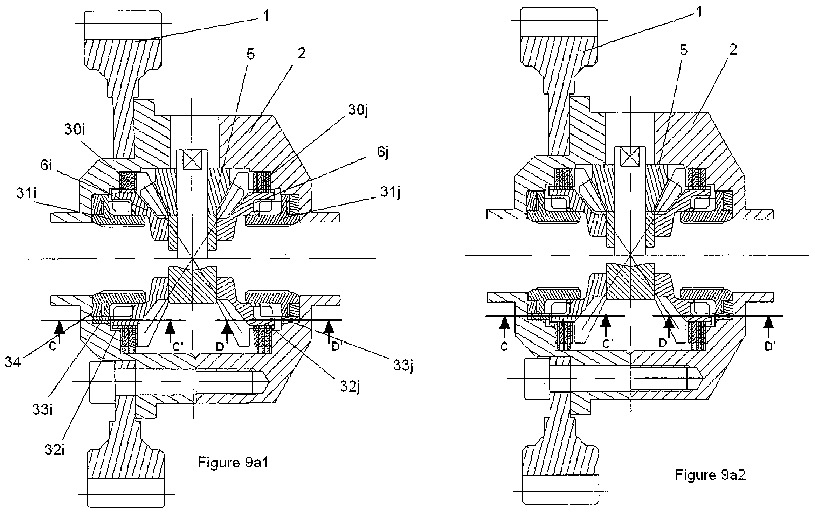

Dans une variante de réalisation formant un cinquième mode de réalisation, le différentiel à glissement limité comprend un boitier (2) muni d'une couronne dentée (1). Le boitier (2) comporte également au moins un satellite (5) et un planétaire (6i, 6j) associé avec chaque organe de sortie. Chacun de ces planétaires (6i, 6j) est associé au boitier (2) du différentiel par l'intermédiaire d'un embrayage (30i, 30j) qui fait intervenir pour chacun d'entre eux une pluralité de disques dont une première partie est fixe en rotation avec un planétaire (6i, 6j) et une seconde partie est fixe en rotation avec le boîtier (2) du différentiel. Les planétaires (6i, 6j) sont également mobiles en translation selon l'axe de rotation de leur organe de sortie respectif. Selon un mode de réalisation préféré, et suivant la figure 9a1, le dispositif de ce mode de réalisation est construit de sorte qu'un effort axial du moyeu (31j) d'un premier planétaire (6j) vers l'intérieur du différentiel entraîne le déplacement de l'ensemble formé par les satellites et les planétaires, jusqu'à ce qu'un rebord (32i) du second planétaire orienté vers l'extérieur du dispositif entre en appui contre les disques de l'embrayage (30i) qui relie ce second planétaire (6i) au boîtier. Le second planétaire (6i) en exerçant ainsi une pression sur son propre embrayage solidarise en rotation les deux planétaires (6i, 6j) avec le boîtier (2) du différentiel. Dans le cas représenté dans la figure 9a1, le côté référencé i n'est soumis à aucun couple résistant, dans cette situation, c'est la solidarisation plus ou moins totale de l'embrayage (30i) qui permet le transfert de couple sur la sortie référencée j. Dans cette situation, l'élément dynamique (34i) n'est soumis à aucun effort axial par conséquent, donc dans le cas le plus défavorable d'une apparition du vitesse différentielle positive sur le côté référencé i, son couple de frottement avec le boîtier sera nul. Par conséquent, les rampes 33a et 33b sont inopérantes car elles transmettent le couple de frottement de l'élément dynamique (34i) qui dans ce cas est nul.

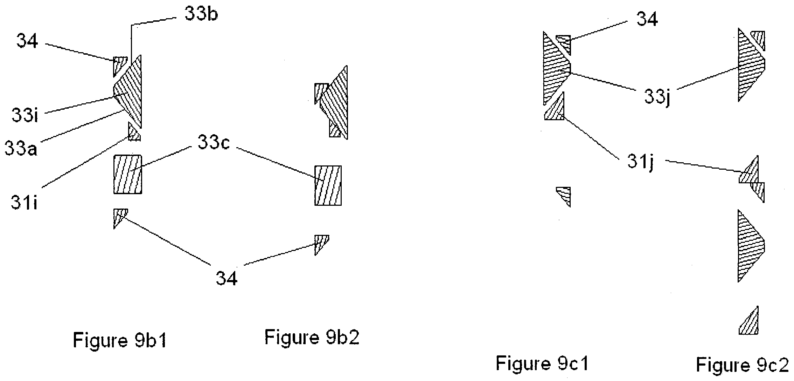

Structurellement, chacun des planétaires (6i, 6j) est associé avec son organe de sortie respectif via un moyeu (31i, 31j). Ces moyeux (31i, 31j) sont associés par des cannelures avec l'organe de sortie de façon à permettre une solidarisation en rotation avec leur organe respectif. Ces moyeux (31i, 31j) s'articulent avec leur planétaire (6i, 6j) respectif par l'intermédiaire d'une coopération mécanique qui permet d'une part un entraînement en rotation du moyeu (31i, 31j) par le planétaire (6i, 6j) et d'autre part un écartement du moyeu (31i, 31j) et du planétaire (6i, 6j) lorsque l'axe rotatif de la sortie présente un couple de résistance. Cet arrangement coopératif peut ainsi se trouver formé, comme illustré sur les figures 9b1 et 9b2, par une succession de rampes positionnées à la périphérie du moyeu (31i, 31j) pour s'articuler avec leurs pendantes disposées sur la périphérie du planétaire (6i, 6j). Un autre arrangement pourrait être formé par des rampes appartenant à un des éléments, moyeu ou planétaire, et coopérant avec au moins une pièce intermédiaire solidaire de l'autre élément, respectivement planétaire ou moyeu. Selon un mode de réalisation préféré, les rampes du moyeu (31i) sont arrangées pour présenter la forme d'un « V » de sorte que la jonction d'une paire de rampes forme une pointe orientée en direction du planétaire (6i). Ainsi, une rampe du moyeu (31i, 31j) s'articule avec une rampe du planétaire (6i, 6j) de façon à permettre, soit une rotation, soit une rotation combinée à une translation.

Chacun des moyeux (31i, 31j) comprend un bord en appui avec la face interne du boîtier (2) du différentiel par l'intermédiaire d'un élément dynamique (34) et/ou, par exemple, d'un roulement, de sorte que le moyeu forme un moyen de poussée pour exercer un effort axial sur son planétaire (6i, 6j) correspondant et apte à déplacer l'ensemble formé par les planétaires (6i, 6j) et satellites du dispositif. Ce déplacement étant opéré lors d'un déséquilibre entre les efforts des moyens de poussée de chaque sortie du différentiel qui apparaît lors d'un déséquilibre de couples aux sorties, ce déséquilibre étant provoqué par une diminution de l'effort axial des rampes en forme de V situées entre le planétaire (6i) et le moyeu (31i) lors d'une perte de couple résistant constatée sur le côté référencé i.

Le dispositif selon ce cinquième mode de réalisation comprend également un mécanisme permettant de générer une poussée dynamique antagoniste aux efforts axiaux de l'ensemble planétaires (6i, 6j) et moyeux (31i, 31j) provoqués par les moyens de poussée de la sortie opposée du différentiel lors d'une mise en vitesses différentielles du dispositif. Selon un mode de réalisation préféré, ce dispositif est arrangé pour chaque organe de sortie et positionné au niveau de chaque ensemble planétaire/moyeu/boitier en faisant intervenir plusieurs moyens (33, 34) munis de rampes et montés mobiles en rotation selon l'axe de l'organe de sortie correspondant. Ces moyens mobiles sont notamment constitué d'un second moyen de poussée (33) qui comporte au moins une rampe (33a) pour interagir avec au moins une rampe du moyeu (31) de sorte qu'un coulissement du second moyen de poussée (33) sur le moyeu (31) par leurs rampes entraine un déplacement du moyen de poussée (33) vers l'intérieur du différentiel. Ce moyen de poussée comprend également un bord en appui contre un bord extérieur du planétaire (6) qui s'articule avec le moyeu (31). Ainsi, lors d'une situation de vitesse différentielle, le moyen de poussée (33) associé aux éléments du différentiel en vitesse positive par rapport au boîtier génère un effort axial contre le planétaire (6) qui lui est associé. Par conséquent, cet effort est antagoniste à l'effort axial généré par les rampes situées entre le planétaire (6) et le moyeu (31) associés à la sortie opposée qui est en vitesse négative par rapport au boîtier. Selon une particularité de réalisation, ce moyen de poussée (33) est monté en périphérie du moyeu (31) avec lequel il s'articule. La rampe ou les rampes du moyeu (31) et du moyen de poussée (33) sont alors portées par un ou plusieurs ergots permettant le positionnement de ces rampes en vis-à-vis. Ces moyens mobiles comprennent également un élément dynamique (34) monté mobile fou en rotation selon l'axe de rotation du moyeu (31) et du moyen de poussée (33). Les efforts axiaux des moyens de poussée s'exercent sur l'élément dynamique (34) qui produit un couple de frottement sur le boîtier (2) lors des vitesses différentielles du dispositif. Cet élément dynamique (34) comprend au moins une rampe (34a) destinée à interagir avec une rampe (33b) du moyen de poussée (33). L'élément dynamique (34) agit alors sur le moyen de poussée (33) par l'intermédiaire des rampes pour générer un effort axial du moyen de poussée (33) vers l'intérieur du différentiel. Les contacts de l'élément dynamique (34i) et du moyeu (31i) sur les rampes du moyen de poussée (33i) provoquent une réaction axiale, par exemple du coté référencé i, qui s'ajoute aux efforts axiaux produits par les moyens de poussée constitués par des rampes en forme de V et situés entre le planétaire (6i) et le moyeu (31i) de ce même coté référencé i. La somme de ces efforts axiaux de ce coté référencé i s'oppose aux efforts produits par les moyens de poussée, constitués par des rampes en forme de V et situés entre le planétaire (6j) et le moyeu (31j), situés sur l'autre sortie du différentiel, c'est-à-dire du coté référencé j. Selon un mode de réalisation particulier, les rampes du moyen de poussée (33) forment un V de part et d'autre duquel sont positionnées les rampes respectives du moyeu (31) et de l'élément dynamique (34). L'ensemble moyeux/moyen de poussée/élément dynamique est arrangé de telle sorte que lorsque l'organe de sortie subit une vitesse différentielle positive, c'est-à-dire lorsque l'organe de sortie est en «vitesse rapide », le moyeu (31) entraine en rotation l'élément dynamique (34), par l'intermédiaire du moyen de poussée dynamique (33), l'élément dynamique (34) frottant sur le boîtier (2). Le moyen de poussée (33) pris en tenaille par le moyeu (31) et l'élément dynamique (34) subit alors au niveau de ses rampes des efforts axiaux qui s'exercent sur le planétaire (6). Selon un mode de réalisation particulier, l'élément dynamique (34) est disposé en périphérie du moyeu (31) avec lequel il s'articule, entre le moyeu (31) et le moyen de poussée (33). La rampe ou les rampes de l'élément dynamique (34) et du moyen de poussée (33) sont alors portées par un ou plusieurs ergots permettant le positionnement de ces rampes en vis-à-vis. Pour faciliter la rotation entre les différents éléments du différentiel, des roulements peuvent être utilisés, notamment entre l'élément dynamique (34) et le moyeu (31).

Selon un mode de réalisation préféré, le moyen de poussée (33) peut comporter des butées (33c), par exemple montées folles en rotation, arrangées pour être positionnées alternativement avec les rampes entre les ergots qui portent les rampes de l'élément dynamique (34) et du moyeu (31).

Ces butées entrent en contact lorsque la sortie est lente, c'est-à-dire avec une vitesse négative par rapport au boîtier. Sur le cas représenté ces butées sont parallèles à l'axe de rotation du différentiel, mais la présente invention n'exclue pas une inclinaison des faces de contact de ces butées qui pourraient alors réagir comme des rampes.

Dans le cas où les faces des butées ne seraient pas inclinées, il est également possible que ces butées soient agencées directement entre l'élément dynamique (34) et le moyeu (31) comme illustré sur la figure 9c2, ainsi la construction est simplifiée par la suppression de la butée (33c) qui est une pièce montée folle en rotation selon l'axe de rotation du moyeu (31) et indépendante du moyen de poussée (33).

Les sections respectivement 9b1, 9b2, 9c1, 9c2 font apparaître un jeu angulaire entre les butées et les rampes situées entre l'élément dynamique (34) le moyeu (31) et les moyens de poussée dynamique (33). C'est-à-dire qu'une rotation angulaire sera nécessaire pour quitter le contact côté rampes dû à une vitesse différentielle positive et trouver un nouveau contact sur les butées conséquent à une vitesse différentielle négative. Ce jeu angulaire est déterminé sur la base du temps de réponse souhaité lors de la mise au point du différentiel.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Différentiel à glissement limité d'une part comportant un organe d'entrée et deux organes de sortie (9a, 9b) et d'autre part intégrant dans un boîtier (2) au moins un satellite (5) et au moins un planétaire (6a, 6b) arrangés pour permettre une solidarisation totale ou partielle en rotation de deux des trois organes d'entrée et/ou de sortie par l'action d'au moins un premier moyen de poussée sur un moyen de solidarisation lors d'une diminution d'un des couples de sortie provoquée par une perte d'adhérence ou une mise en vitesses différentielles, le différentiel comprend également au moins un second moyen de poussée dynamique (7, 15, 23a, 23b, 25) antagoniste à l'action du premier moyen de poussée, le second moyen de poussée dynamique (7, 15, 23, 25) antagoniste étant arrangé pour être activé lors d'une mise en vitesses différentielles du différentiel, le second moyen de poussée dynamique (7, 15, 23, 25) antagoniste est formé par un élément monté mobile en rotation par rapport au planétaire (6a, 6b) du différentiel et un moyeu (8a, 8b) qui lie le planétaire à un arbre de sortie (9a, 9b) du différentiel, cet élément mobile s'articulant grâce à une rampe fixe en rotation avec le planétaire (6a, 6b) et un moyeu (8a, 8b) du différentiel, **caractérisé en ce que** le planétaire entraîne en rotation le moyeu (8a, 8b) monté mobile en translation par rapport au planétaire (6a, 6b) et fixe avec l'axe rotatif de sortie (9a, 9b), le moyeu comportant au moins un troisième moyen de poussée antagoniste formé par au moins une paire de rampes arrangées en forme d'un « V » de sorte que la jonction des rampes forme une pointe orientée en direction du planétaire pour coopérer avec les rampes du planétaire.

2. Différentiel à glissement limité selon la revendication 1, **caractérisé en ce que** le différentiel comprend un arrangement générant, lors de la mise en vitesses différentielles du différentiel, au moins un frottement spécifique à cette mise en mouvement utilisé pour actionner un second moyen de poussée dynamique antagoniste.

3. Différentiel à glissement limité selon une des revendications 1 ou 2, **caractérisé en ce que**, le second moyen de poussée dynamique antagoniste forme une liaison avec l'organe de sortie présentant une vitesse différentielle et au moins un des autres organes du différentiel par l'intermédiaire d'au moins une rampe pour exercer un effort dynamique antagoniste généré par des frottements apparaissant lors d'une mise en vitesses différentielles du différentiel.

4. Différentiel à glissement limité selon la revendication 1, **caractérisé en ce que** le second moyen de poussée dynamique antagoniste comporte au moins un point d'articulation en appui contre une rampe d'un moyeu du différentiel.

5. Différentiel à glissement limité selon la revendication 1, **caractérisé en ce que** le second moyen de poussée dynamique antagoniste comporte au moins un point d'articulation en appui contre une rampe d'un planétaire du différentiel.

6. Différentiel à glissement limité selon la revendication 1, **caractérisé en ce que** le second moyen de poussée dynamique antagoniste comporte au moins un point d'articulation en appui contre une rampe d'un élément monté fixe en rotation avec un planétaire et/ou un moyeu du différentiel.

7. Différentiel à glissement limité selon une des revendications 1 à 6, **caractérisé en ce que** le différentiel comprend au moins une liaison frottante susceptible d'être mise en pression par un effort axial du second moyen de poussée dynamique antagoniste sous l'action d'une rampe.

8. Différentiel à glissement limité selon une des revendications 1 à 5, **caractérisé en ce que** le second moyen de poussée dynamique antagoniste est monté formé par un élément centré sur l'axe de rotation d'une sortie du différentiel, ce second moyen de poussée dynamique antagoniste comprenant au moins une rampe pour combiner une rotation du moyen de poussée dynamique antagoniste et produire axialement un effort antagoniste au niveau d'une face appuyée contre un élément du différentiel fixe en rotation avec l'organe d'entrée.

9. Différentiel à glissement limité selon une des revendications 1 à 3, **caractérisé en ce que** le second moyen de poussée dynamique antagoniste est entraîné en rotation au niveau d'une face intérieure en regard de l'axe de rotation d'un planétaire, par frottement avec un planétaire et/ou un élément monté fixe en rotation avec un planétaire, une extrémité en périphérie du second moyen de poussée comportant une rampe qui interagit avec un moyen de traction solidaire d'un plateau de pression annulaire montée libre en translation dans le boîtier du différentiel de façon à générer une force dynamique antagoniste au déplacement du plateau de pression lors d'une mise en vitesses différentielles du différentiel.

10. Différentiel à glissement limité selon la revendication 9, caractérisé en en ce que le planétaire et/ou l'élément fixe en rotation avec le planétaire est monté mobile en translation axiale par rapport à l'axe d'au moins un satellite du différentiel, sous l'action d'au moins un troisième moyen de poussée antagoniste formé par des rampes.

11. Différentiel à glissement limité selon une des revendications 1 à 5 et/ou selon la revendication 7, **caractérisé en ce que** l'entraînement en rotation différentielle d'un élément mobile monté fou par le second moyen de poussée dynamique provoque un effort axial antagoniste à l'effort du moyen de poussée de la sortie opposée du différentiel, l'élément mobile monté fou subissant un couple de frottement avec un élément du différentiel lorsqu'il est entrainé en rotation différentielle.

12. Différentiel à glissement limité selon la revendication 11, **caractérisé en ce que** le moyeu et/ou l'élément mobile s'articulent avec le second moyen de poussée dynamique grâce à des rampes respectives.

## Patentansprüche

1. Differenzial mit begrenztem Schlupf, das einerseits ein Eingangsteil und zwei Ausgangsteile (9A, 9B) umfasst und andererseits in einem Gehäuse (2) wenigstens ein Satellitenrad (5) und wenigstens ein Planetenrad (6a, 6b) beinhaltet, angeordnet zum Zulassen einer vollkommenen oder teilweisen Drehbefestigung von zwei von drei Ein- und/oder Ausgangsteilen durch die Wirkung von wenigstens einem Schubmittel auf einem Befestigungsmittel bei einer Reduzierung von einem der Abtriebsmomente, hervorgerufen durch einen Haftverlust oder einen differenziellen Anlaufvorgang, wobei das Differenzial auch wenigstens ein zweites dynamisches Schubmittel (7, 15, 23a, 23b, 25) entgegengesetzt zur Wirkung des ersten Schubmittels umfasst, wobei das zweite entgegengesetzte dynamische Schubmittel (7, 15, 23, 25) so ausgelegt ist, dass es bei einem differenziellen Anlaufvorgang des Differenzials aktiviert wird, wobei das zweite entgegengesetzte dynamische Schubmittel (7, 15, 23, 25) von einem Element, das drehbeweglich in Bezug auf das Planetenrad (6a, 6b) des Differenzials montiert ist, und einer Nabe (8a, 8b) gebildet wird, die das Planetenrad mit einer Abtriebswelle (9a, 9b) des Differenzials verbindet, wobei dieses bewegliche Element mittels einer drehfesten Rampe an das Planetenrad (6a, 6b) und eine Nabe (8a, 8b) des Differenzials angelenkt ist,
**dadurch gekennzeichnet, dass** das Planetenrad die Nabe (8a, 8b) in Drehung versetzt, die translationsbeweglich mit Bezug auf das Planetenrad (6a, 6b) und fest an der Abtriebsdrehachse (9a, 9b) montiert ist, wobei die Nabe wenigstens ein drittes entgegengesetztes Schubmittel umfasst, gebildet durch wenigstens ein Paar Rampen, die in Form eines "V" angeordnet sind, so dass der Übergang der Rampen einen Punkt bildet, der in Richtung des Planetenrads orientiert ist, um mit den Rampen des Planetenrads zusammenzuwirken.

2. Differenzial mit begrenztem Schlupf nach Anspruch 1, **dadurch gekennzeichnet, dass** das Differenzial eine Anordnung umfasst, die beim differenziellen Anlaufvorgang des Differenzials wenigstens eine für dieses In-Bewegung-Versetzen spezifische Reibung erzeugt, um ein zweites entgegengesetztes dynamisches Schubmittel zu betätigen.

3. Differenzial mit begrenztem Schlupf nach Anspruch 1 oder 2, **dadurch gekennzeichnet, dass** das zweite entgegengesetzte dynamische Schubmittel eine Verbindung mit dem Ausgangsteil, das eine differenzielle Geschwindigkeit aufweist, und wenigstens einem der anderen Teile des Differenzials mittels wenigstens einer Rampe zum Ausüben einer entgegengesetzten dynamischen Kraft bildet, erzeugt durch Reibungen, die bei einem differenziellen Anlaufvorgang des Differenzials erscheinen.

4. Differenzial mit begrenztem Schlupf nach Anspruch 1, **dadurch gekennzeichnet, dass** das zweite entgegengesetzte dynamische Schubmittel wenigstens einen Anlenkpunkt in Anlage an einer Rampe einer Nabe des Differenzials umfasst.

5. Differenzial mit begrenztem Schlupf nach Anspruch 1, **dadurch gekennzeichnet, dass** das zweite entgegengesetzte dynamische Schubmittel wenigstens einen Anlenkpunkt in Anlage an einer Rampe eines Planetenrads des Differenzials umfasst.

6. Differenzial mit begrenztem Schlupf nach Anspruch 1, **dadurch gekennzeichnet, dass** das zweite entgegengesetzte dynamische Schubmittel wenigstens einen Anlenkpunkt in Anlage an einer Rampe eines Elements umfasst, das drehfest mit einem Planetenrad und/oder einer Nabe des Differenzials montiert ist.

7. Differenzial mit begrenztem Schlupf nach einem der Ansprüche 1 bis 6, **dadurch gekennzeichnet, dass** das Differenzial wenigstens eine Reibverbindung aufweist, die durch eine axiale Kraft des zweiten entgegengesetzten dynamischen Schubmittels unter der Wirkung einer Rampe unter Druck gesetzt werden kann.

8. Differenzial mit begrenztem Schlupf nach einem der Ansprüche 1 bis 5, **dadurch gekennzeichnet, dass** das zweite entgegengesetzte dynamische Schubmittel gebildet durch ein auf der Drehachse eines Ausgangs des Differenzials zentriertes Element montiert ist, wobei dieses zweite entgegengesetzte dynamische Schubmittel wenigstens eine Rampe zum Kombinieren einer Drehung des entgegengesetzten dynamischen Schubmittels und zum axialen Produzieren einer entgegengesetzten Kraft an einer Fläche umfasst, die an einem Element des Differenzials drehfest mit dem Eingangsteil anliegt.

9. Differenzial mit begrenztem Schlupf nach einem der Ansprüche 1 bis 3, **dadurch gekennzeichnet, dass** das zweite entgegengesetzte dynamische Schubmittel an einer Innenfläche gegenüber der Drehachse eines Planetenrads durch Reibung mit einem Planetenrad und/oder einem drehfest mit einem Planetenrad montierten Element in Drehung versetzt wird, wobei ein Ende an der Peripherie des zweiten Schubmittels einer Rampe umfasst, die mit einem Traktionsmittel einstückig mit einer ringförmigen Druckplatte interagiert, die translatorisch frei beweglich in dem Gehäuse des Differenzials montiert ist, um eine dynamische Kraft entgegengesetzt zur Verschiebung der Druckplatte bei einem differenziellen Anlaufvorgang des Differenzial zu erzeugen.

10. Differenzial mit begrenztem Schlupf nach Anspruch 9, **dadurch gekennzeichnet, dass** das Planetenrad und/oder das mit dem Planetenrad drehfeste Element translationsbeweglich axial mit Bezug auf die Achse von wenigstens einem Satellitenrad des Differenzials unter der Wirkung von wenigstens einem dritten entgegengesetzten, durch die Rampen gebildeten Schubmittel montiert ist.

11. Differenzial mit begrenztem Schlupf nach einem der Ansprüche 1 bis 5 und/oder nach Anspruch 7, **dadurch gekennzeichnet, dass** das differenzielle In-Drehung-Versetzen eines beweglichen Elements, das frei beweglich durch das zweite dynamische Schubmittel montiert ist, eine axiale Kraft entgegengesetzt zur Kraft des Schubmittels des Eingangs gegenüber dem Differenzial hervorruft, wobei das frei beweglich montierte freibewegliche Element einem Reibungsmoment mit einem Element des Differenzials ausgesetzt wird, wenn es in differenzielle Drehung versetzt wird.

12. Differenzial mit begrenztem Schlupf nach Anspruch 11, **dadurch gekennzeichnet, dass** die Nabe und/oder das bewegliche Element an das zweite dynamische Schubmittel mittels jeweiliger Rampen angelenkt sind.

## Claims

1. Limited-slip differential on the one hand comprising one input member and two output members (9a, 9b) and on the other hand integrating in a housing (2) at least one planet gear (5) and at least one sun gear (6a, 6b) arranged to allow partial or complete rotation-locking connection of two of the three input and/or output members by the action of at least one thrust means on a rotation-locking means upon a decrease in one of the output torques caused by a loss of adhesion or adoption of differential speeds, the differential also comprises at least one second dynamic thrust means (7, 15, 23a, 23b, 25) opposing the action of the first thrust means, the second opposing dynamic thrust means (7, 15, 23, 25) being arranged to be activated when the differential adopts differential speeds, the second opposing dynamic thrust means (7, 15, 23, 25) is formed by an element mounted so as to be rotatable relative to the sun gear (6a, 6b) of the differential and a hub (8a, 8b) which connects the sun gear to an output shaft (9a, 9b) of the differential, this rotatable element being pivotable owing to a ramp fixed non-rotatably to the sun gear (6a, 6b) and a hub (8a, 8b) of the differential, **characterised in that** the sun gear rotates the hub (8a, 8b) mounted translationally relative to the sun gear (6a, 6b) and fixed to the rotary output shaft (9a, 9b), the hub comprising at least one third opposing thrust means formed by at least one pair of ramps arranged in a V shape so that the junction of the ramps forms a point oriented towards the sun gear in order to cooperate with the ramps of the sun gear.

2. Limited-slip differential according to claim 1, **characterised in that** the differential comprises an arrangement generating, when the differential adopts differential speeds, at least one friction specific to this setting in motion used to actuate a second opposing dynamic thrust means.

3. Limited-slip differential according to one of claims 1 or 2, **characterised in that** the second opposing dynamic thrust means forms a connection to the output member having a differential speed and at least one of the other members of the differential by means of at least one ramp in order to exert an opposing dynamic force generated by frictions appearing when the differential adopts differential speeds.

4. Limited-slip differential according to claim 1, **characterised in that** the second opposing dynamic thrust means comprises at least one pivot point bearing on a ramp of a hub of the differential.

5. Limited-slip differential according to claim 1, **characterised in that** the second opposing dynamic thrust means comprises at least one pivot point bearing on a ramp of a sun gear of the differential.

6. Limited-slip differential according to claim 1, **characterised in that** the second opposing dynamic thrust means comprises at least one pivot point bearing on a ramp of an element connected non-rotatably to a sun gear and/or a hub of the differential.

7. Limited-slip differential according to one of claims 1 to 6, **characterised in that** the differential comprises at least one frictional connection capable of having pressure applied by an axial force of the second opposing dynamic thrust means under the action of a ramp.

8. Limited-slip differential according to one of claims 1 to 5, **characterised in that** the second opposing dynamic thrust means is formed by an element centred on the axis of rotation of one output of the differential, this second opposing dynamic thrust means comprising at least one ramp for combining a rotation of the opposing dynamic thrust means and producing axially a force opposing the level of a face bearing on an element of the differential non-rotatably connected to the input member.

9. Limited-slip differential according to one of claims 1 to 3, **characterised in that** the second opposing dynamic thrust means is rotated at the level of an internal face opposite the axis of rotation of a sun gear, by friction with a sun gear and/or an element non-rotatably connected to a sun gear, one end at the periphery of the second thrust means comprising a ramp which interacts with a traction means rigidly connected to an annular pressure plate mounted free in translation in the housing of the differential so as to generate a dynamic force opposing the displacement of the pressure plate when the differential adopts differential speeds.

10. Limited-slip differential according to claim 9, **characterised in that** the sun gear and/or the element non-rotatably connected to the sun gear is capable of axial translational movement relative to the axis of at least one planet gear of the differential, under the action of at least one third opposing thrust means formed by ramps.

11. Limited-slip differential according to one of claims 1 to 5 and/or according to claim 7, **characterised in that** the differential rotation of a movable idler element by the second dynamic thrust means causes an axial force opposing the force of the thrust means of the opposite output of the differential, the movable idler element undergoing a frictional torque with an element of the differential when it is rotated differentially.

12. Limited-slip differential according to claim 11, **characterised in that** the hub and/or the movable element are articulated to the second dynamic thrust means owing to respective ramps.
